# EUROPEAN PATENT SPECIFICATION

(11) **EP 2 167 602 B1**
(45) Date of publication and mention of the grant of the patent: **13.11.2019**
(21) Application number: 08781334.1
(22) Date of filing: 03.07.2008
(51) Int. Cl.: C09K 5/04, C07C 19/08

(54) **COMPOSITIONS CONTAINING DIFLUOROMETHANE**
ZUSAMMENSETZUNGEN MIT DIFLUORMETHAN
COMPOSITIONS CONTENANT DU DIFLUOROMÉTHANE

(30) Priority: 06.07.2007 US 773959
(43) Date of publication of application: 31.03.2010
(73) Proprietor: Honeywell International Inc., Morris Plains, NJ 07950 (US)
(72) Inventor: SINGH, Rajiv R., Getzville, New York 14068 (US); SHANKLAND, Ian, Randolph, New Jersey 07869 (US); HULSE, Ryan, Getzville, New York 14068 (US)
(74) Representative: Crooks, Elizabeth Caroline
(86) International application number: PCT/US2008/069139
(87) International publication number: WO 2009/009413

(56) References cited:
- WO-A2-2006/094303
- WO-A2-2008/033568
- US-A- 5 902 912
- US-A1- 2006 033 071
- US-B1- 6 176 102
- US-B2- 6 849 194

## Description

### FIELD OF THE INVENTION

This invention relates to compositions having utility in numerous applications, including particularly refrigeration systems, and to methods and systems utilizing such compositions. In preferred aspects, the present invention is directed to refrigerant compositions comprising difluoromethane and at least one multi-fluorinated olefin and/or at least one fluoroiodocarbon.

### BACKGROUND OF THE INVENTION

Fluorocarbon based fluids have found widespread use in many commercial and industrial applications. For example, fluorocarbon based fluids are frequently used as a working fluid in systems such as air conditioning, heat pump and refrigeration applications. The vapor compression cycle is one of the most commonly used type methods to accomplish cooling or heating in a refrigeration system. The vapor compression cycle usually involves the phase change of the refrigerant from the liquid to the vapor phase through heat absorption at a relatively low pressure and then from the vapor to the liquid phase through heat removal at a relatively low pressure and temperature, compressing the vapor to a relatively elevated pressure, condensing the vapor to the liquid phase through heat removal at this relatively elevated pressure and temperature, and then reducing the pressure to start the cycle over again.

Certain fluorocarbons have been a preferred component in many heat exchange fluids, such as refrigerants, for many years in many applications. For, example, fluoroalkanes, such as chlorofluoromethane and chlorofluoroethane derivatives, have gained widespread use as refrigerants in applications including air conditioning and heat pump applications owing to their unique combination of chemical and physical properties. Many of the refrigerants commonly utilized in vapor compression systems are either single components fluids or azeotropic mixtures.

Concern has increased in recent years about potential damage to the earth's atmosphere and climate, and certain chlorine-based compounds have been identified as particularly problematic in this regard. The use of chlorine-containing compositions (such as chlorofluorocarbons (CFCs), hydrochlorofluorocarbons (HCFCs) and the like) as refrigerants in air-conditioning and refrigeration systems has become disfavored because of the ozone-depleting properties associated with many of such compounds. There has thus been an increasing need for new fluorocarbon and hydrofluorocarbon compounds and compositions that offer alternatives for refrigeration and heat pump applications. For example, it has become desirable to retrofit chlorine-containing refrigeration systems by replacing chlorine-containing refrigerants with non-chlorine-containing refrigerant compounds that will not deplete the ozone layer, such as hydrofluorocarbons (HFCs).

Another concern surrounding many existing refrigerants is the tendency of many such products to cause global warming. This characteristic is commonly measured as global warming potential (GWP). The GWP of a compound is a measure of the potential contribution to the green house effect of the chemical against a known reference molecule, namely, C0₂ which has a GWP = 1. For example, the following known refrigerants possess the following Global Warming Potentials:

| REFRIGERANT | GWP |
|---|---|
| R410A | 1975 |
| R-507 | 3850 |
| R404A | 3784 |
| R407C | 1653 |

While each of the above-noted refrigerants has proven effective in many respects, these material are become increasingly less preferred since it is frequently undesirable to use materials having GWPs greater than about 1000. A need exists, therefore, for substitutes for these and other existing refrigerants having undesirable GWPs.

It is generally considered important, however, that any potential substitute refrigerant must also possess those properties present in many of the most widely used fluids, such as excellent heat transfer properties, chemical stability, low- or no- toxicity, non-flammability and lubricant compatibility, among others.

With regard to efficiency in use, it is important to note that a loss in refrigerant thermodynamic performance or energy efficiency may have secondary environmental impacts through increased fossil fuel usage arising from an increased demand for electrical energy.

Furthermore, it is generally considered desirable for refrigerant substitutes to be effective without major engineering changes to conventional vapor compression technology currently used with existing refrigerants, such as CFC-containing refrigerants.

Flammability is another important property for many applications. That is, it is considered either important or essential in many applications, including particularly in heat transfer applications, to use compositions which are non-flammable. Thus, it is frequently beneficial to use in such compositions compounds which are nonflammable. As used herein, the term "nonflammable" refers to compounds or compositions, which are determined to be nonflammable as determined in accordance with ASTM standard E-681, dated 2002. Unfortunately, many HFCs, which might otherwise be desirable for used in refrigerant compositions are not nonflammable. For example, the fluoroalkane difluoroethane (HFC-152a) and the fluoroalkene 1,1,1-trifluoropropene (HFO-1243zf) are each flammable and therefore not generally desirable when used alone in many applications.

Applicants have thus come to appreciate a need for compositions, and particularly heat transfer compositions, that are potentially useful in numerous applications, including vapor compression heating and cooling systems and methods, while avoiding one or more of the disadvantages noted above.

WO 2006/094303 relates to compositions for use in refrigeration, air-conditioning, and heat pump systems wherein the composition comprises a fluoroolefin and at least one other component.

US 2006/033071 relates to azeotrope-like compositions comprising difluoromethane and trifluoroiodomethane and uses thereof.

WO 2008/033568 relates to a method of determining the components of a fluoroolefin composition, a method of recharging a fluid system in which the composition is used, and sensors used therefor.

### SUMMARY

The present invention is defined by the appended claims.

### BRIEF DESCRIPTION OF THE DRAWINGS

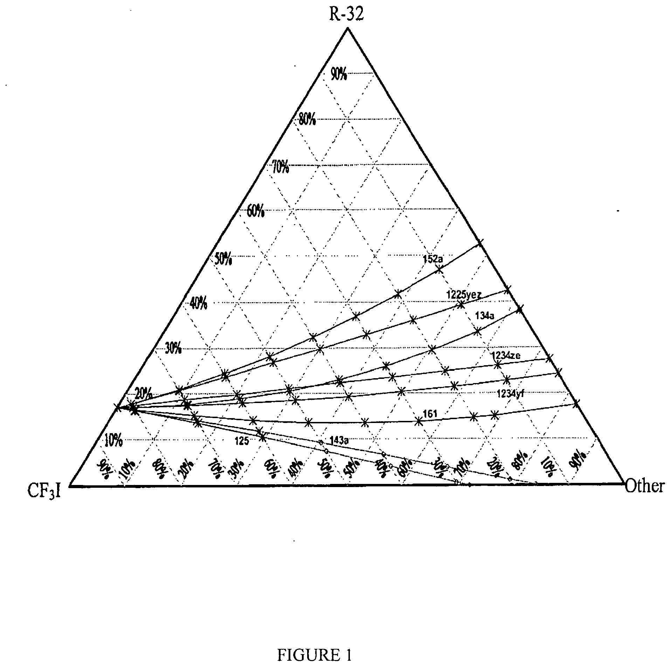

Figures 1 -12 are ternary composition curves for certain preferred compositions of the present invention at various concentrations of each component for which the capacity substantially matches a known refrigerant, as described in the Examples hereof.

### DETAILED DESCRIPTION OF PREFERRED EMBODIMENTS

### THE COMPOSITIONS

For embodiments in which the composition is used or intended for use in a system originally designed for use with one or more of R-22, R-404A, R-407C, R-410A, R-507 (hereinafter referred to for purposes of convenience but not by way of limitation as the "existing refrigerant group"), the difluoromethane is preferably present in the composition in an amount of from about 1 wt% to about 60 wt%, more preferably from about 5 wt% to about 55 wt%, and even more preferably form about 10 wt% to about 50 wt%.

In certain preferred embodiments, the first component further comprises CO₂, preferably in amounts of not greater than about 5 wt% of the composition.

The fluoroalkene compounds of the present invention are sometimes referred to herein for the purpose of convenience as hydrofluoro-olefins or "HFOs" if they contain at least one hydrogen.

Applicants believe that, in general, HFO-1234ze is
generally effective and exhibits utility according to claim 1. However, it has been surprisingly and unexpectedly found that HFO-1234ze exhibits
a highly desirable low level of toxicity compared to other of such compounds. As can be readily appreciated, this discovery is of potentially enormous advantage and benefit for the formulation of compositions which would otherwise contain relatively toxic compounds.

Applicants believe also that all structural, geometric and stereoisomers of HFO-1234ze are effective and of beneficially low toxicity.

The compositions of the present invention comprise one or more tetrafluoropropenes. The term "HFO-1234" is used herein to refer to all tetrafluoropropenes. Among the tetrafluoropropenes, both cis- and trans-1,3,3,3-tetrafluoropropene (HFO-1234ze) are particularly preferred.

The term HFO-1234ze is used herein generically to refer to 1,3,3,3-tetrafluoropropene, independent of whether it is the cis- or trans- form. The terms "cisHFO-1234ze" and "transHFO-1234ze" are used herein to describe the cis- and trans- forms of 1, 3, 3, 3-tetrafluoropropene respectively. The term "HFO-1234ze" therefore includes within its scope cisHFO-1234ze, transHFO-1234ze, and all combinations and mixtures of these.

Although the properties of cisHFO-1234ze and transHFO-1234ze differ in at least some respects, it is contemplated that each of these compounds is adaptable for use, either alone or together with other compounds including its stereoisomer, in connection with each of the applications, methods and systems described herein. For example, while transHFO-1234ze may be preferred for use in certain refrigeration systems because of its relatively low boiling point (-19° C), it is nevertheless contemplated that cisHFO-1234ze, with a boiling point of +9° C, also has utility in certain refrigeration systems of the present invention. Accordingly, it is to be understood that the terms "HFO-1234ze" and 1, 3, 3, 3-tetrafluoropropene refer to both stereo isomers, and the use of this term is intended to indicate that each of the cis-and trans- forms applies and/or is useful for the stated purpose unless otherwise indicated.

HFO-1234 compounds are known materials and are listed in Chemical Abstracts databases. The production of fluoropropenes such as CF₃CH=CH₂ by catalytic vapor phase fluorination of various saturated and unsaturated halogen-containing C₃ compounds is described in U.S. Patent Nos. 2,889,379; 4,798,818 and 4,465,786. EP 974,571 discloses the preparation of 1,1,1,3-tetrafluoropropene by contacting 1,1,1,3,3-pentafluoropropane (HFC-245fa) in the vapor phase with a chromium-based catalyst at elevated temperature, or in the liquid phase with an alcoholic solution of KOH, NaOH, Ca(OH)₂ or Mg(OH)₂ In addition, methods for producing compounds in accordance with the present invention are described generally in connection with pending United States Patent Application entitled "Process for Producing Fluoropropenes" bearing attorney docket number (H0003789 (26267)).

The present compositions, comprising HFO-1234ze, are believed to possess properties that are advantageous for a number of important reasons. For example, applicants believe, based at least in part on mathematical modeling, that HFO-1234ze will not have a substantial
negative affect on atmospheric chemistry, being negligible contributors to ozone depletion in comparison to some other halogenated species. The preferred compositions of the present invention thus have the advantage of not contributing substantially to ozone depletion. The preferred compositions also do not contribute substantially to global warming compared to many of the hydrofluoroalkanes presently in use.

In certain preferred forms, compositions of the present invention have a Global Warming Potential (GWP) of not greater than about 1000, more preferably not greater than about 500, and even more preferably not greater than about 150. In certain embodiments, the GWP of the present compositions is not greater than about 100 and even more preferably not greater than about 75. As used herein, "GWP" is measured relative to that of carbon dioxide and over a 100-year time horizon, as defined in "The Scientific Assessment of Ozone Depletion, 2002, a report of the World Meteorological Association's Global Ozone Research and Monitoring Project," .

In certain preferred forms, the present compositions also preferably have an Ozone Depletion Potential (ODP) of not greater than 0.05, more preferably not greater than 0.02 and even more preferably about zero. As used herein, "ODP" is as defined in "The Scientific Assessment of Ozone Depletion, 2002, A report of the World Meteorological Association's Global Ozone Research and Monitoring Project,".

In general, the preferred heat transfer compositions of the present invention are zeotropic over much, and potentially over the entire, range of temperatures and pressures of use. That is, the mixtures of the components produce a liquid with a non-constant boiling temperature, therefore producing what is know as a "temperature glide" in the evaporator and condenser. The "temperature glide" is the change in temperature that occurs as a zeotropic material condenses or evaporates. This glide is preferably considered in connection with the method and composition aspects of the present invention in order to provide a composition which most effectively matches the refrigerant composition being replaced. In a single component or azeotropic mixture the temperature glide is 0. R-407C is a zeotropic mixture that has a 5°C glide in typical applications, and in certain preferred embodiments, the present compositions produce a temperature glide of about 5°C under conditions of actual or contemplated use.

The compositions of the present invention may include other components for the purpose of enhancing or providing certain functionality to the composition, or in some cases to reduce the cost of the composition. For example, refrigerant compositions according to the present invention, especially those used in vapor compression systems, include a lubricant, generally in amounts of from about 30 to about 50 percent by weight of the composition. Furthermore, the present compositions may also include a compatibilizer, such as propane, for the purpose of aiding compatibility and/or solubility of the lubricant. When present, such compatibilizers, including propane, butanes and pentanes, are preferably present in amounts of from about 0.5 to about 5 percent by weight of the composition. Combinations of surfactants and solubilizing agents may also be added to the present compositions to aid oil solubility, as disclosed by U.S. Patent No. 6,516,837.

Commonly used refrigeration lubricants such as Polyol Esters (POEs) and Poly Alkylene Glycols (PAGs), silicone oil, mineral oil, alkyl benzenes (ABs) and poly(alphaolefin) (PAO) that are used in refrigeration machinery with hydrofluorocarbon (HFC) refrigerants may be used with the refrigerant compositions of the present invention.

Many existing refrigeration systems are currently adapted for use in connection with existing refrigerants, and the compositions of the present invention are believed to be adaptable for use in many of such systems, either with or without system modification. In many applications the compositions of the present invention may provide an advantage as a replacement in systems, which are currently based on refrigerants having a relatively high capacity. Furthermore, in embodiments where it is desired to use a lower capacity refrigerant composition of the present invention, for reasons of cost for example, to replace a refrigerant of higher capacity, such embodiments of the present compositions provide a potential advantage. In certain applications, the refrigerants of the present invention potentially permit the beneficial use of larger displacement compressors, thereby resulting in better energy efficiency than other refrigerants, such as HFC-134a. Therefore the refrigerant compositions of the present invention, particularly compositions comprising transHFP-1234ze, provide the possibility of achieving a competitive advantage on an energy basis for refrigerant replacement applications.

It is contemplated that the compositions of the present invention
comprising HFO-1234ze, also have advantage (either in original systems or when used as a replacement for refrigerants), in chillers typically used in connection with commercial air conditioning systems.

The present methods, systems and compositions are thus adaptable for use in connection with automotive air conditioning systems and devices, commercial refrigeration systems and devices, chillers, residential refrigerator and freezers, general air conditioning systems, heat pumps, and the like.

Particularly preferred embodiments of the compositions of the present invention are described below.

### HFC-32/CF3I Based Compositions

In one preferred embodiment of the present invention, the compositions comprise a first component which comprises in major proportion, and preferably consists essentially of, and even more preferably consists of, HFC-32. In such embodiments,
the amount of the HFC-32 present in the composition is from about 1 to about 60 percent by weight of the composition.

The compositions in such preferred embodiments also comprise a second component comprising CF3I. In certain of such embodiments, the second component comprises CF3I in major proportion, and preferably consists essentially of, and even more preferably consists of, CF3I. The amount of CF3I present in the composition is
from about 5 to about 98 percent by weight of the composition. For those embodiments in which the second component comprises both CF3I and HFO-1225, the relative amount of CF3I and HFO-1225 can vary widely, but it is preferred in such embodiments that the amount of CF3I is from about 5 to about 98 percent by weight of the composition and the amount of HFO-1225 is from about 1 to about 65 percent by weight of the composition. For embodiments in which the second component comprises CF3I and HF01225, the third component is optional, but if present, is preferably present in an amount of from about 1 to 94 percent by weight of the composition. In embodiments in which the second component consists essentially of CF3I, that is, the composition does not include a substantial amount of HFO-1225, the third component is required and is preferably present in the composition in an amount of at least about 1 percent by weight of the composition.

It is contemplated that a large number of combinations of compounds may be used as the third component of the present invention in this particular embodiment, and in a wide variety of relative concentrations, and all amounts and combinations are believed to be adaptable for use in accordance with the teachings contained herein. In certain preferred embodiments, however, wherein the third component comprises one or more of monofluoroethane (HFC-161), difluoroethane (HFC-152a), trifluoroethane (HFC-143a), 1,1,1,2-tetrafluoroethane (HFC-134a), pentafluoroethane (HFC-125), 1,1,1,3-tetrafluoropropene (HFO-1234ze, including all isomers) and 1,1,1,2-tetrafluoropropene (HFO-1234yf), if present, such components are selected from within the ranges indicated in the following Table 1 (indicated amounts are intended to be understood to be preceded by the modifier "about" and are based on the weight percentage in the composition):

**TABLE 1**

| THIRD COMPONENT↓ | WEIGHT PERCENTAGE |
|---|---|
| R-152a | 1 - 65 |
| R-134a | 1 - 70 |
| 1234ze | 1 - 80 |
| 1234-yf | 1 - 80 |
| R-125 | 1 - 30 |
| R-161 | 1 - 94 |
| R-143a | 1 - 20 |

### THE SELECTION METHODS

One aspect of the present invention involves methods for selecting a heat transfer composition for use in connection with an existing heat transfer system. As used herein, the term "existing heat transfer system" includes not only actual heat transfer systems that have been built and are in place but also systems that are not yet built but are being conceived and/or are in the design phase. One preferred embodiment provides methods for selecting a heat transfer composition for use in connection with an existing heat transfer system that has been designed for use in connection with a previously known composition. In such cases, the previously known composition will generally have a desired or expected heat capacity but will also exhibit one or more undesirable properties. For example, each of the following previously known refrigerants have desirably heat capacities for the systems in which they are being used but also exhibit the undesirably high GWP as indicated:

| REFRIGERANT | GWP |
|---|---|
| R134a | 1300 |
| R125 | 3400 |
| R143a | 4300 |

The preferred method steps comprise analyzing the parameters of the system in a manner sufficient to permit approximation of the capacity of the existing or design heat transfer fluid and providing a tool that permits approximation of the capacity of two or more compositions of the present invention at the conditions of existing or design system, and utilizing said to select a composition for use in the existing or design system. Examples of such a tool are the charts illustrated in the Examples below. A computer program, configured in accordance with the teachings contained herein, is an example of another such tool. In preferred embodiments, the tool also is able to approximate, determine or incorporate the GWP and/or the flammability of the composition of the present invention and the selection step comprises selecting the composition so as to have a GWP of less than about 1000, and even more preferably less than about 150, and/or to have no flammability or flammability within a predetermined parameter.

### HEAT TRANSFER METHODS AND SYSTEMS

The compositions of the present invention are useful in connection with numerous methods and systems, including as heat transfer fluids in methods and systems for transferring heat, such as refrigerants used in refrigeration, air conditioning and heat pump systems.

The preferred heat transfer methods generally comprise providing a composition of the present invention and causing heat to be transferred to or from the composition changing the phase of the composition. For example, the present methods provide cooling by absorbing heat from a fluid or article, preferably by evaporating the present refrigerant composition in the vicinity of the body or fluid to be cooled to produce vapor comprising the present composition. Preferably the methods include the further step of compressing the refrigerant vapor, usually with a compressor or similar equipment to produce vapor of the present composition at a relatively elevated pressure. Generally, the step of compressing the vapor results in the addition of heat to the vapor, thus causing an increase in the temperature of the relatively high-pressure vapor. Preferably, the present methods include removing from this relatively high temperature, high pressure vapor at least a portion of the heat added by the evaporation and compression steps. The heat removal step preferably includes condensing the high temperature, high-pressure vapor while the vapor is in a relatively high-pressure condition to produce a relatively high-pressure liquid comprising a composition of the present invention. This relatively high-pressure liquid preferably then undergoes a nominally isoenthalpic reduction in pressure to produce a relatively low temperature, low-pressure liquid. In such embodiments, it is this reduced temperature refrigerant liquid which is then vaporized by heat transferred from the body or fluid to be cooled.

In another process, the compositions of the
invention may be used in a method for producing heating which comprises condensing a refrigerant comprising the compositions in the vicinity of a liquid or body to be heated. Such methods, as mentioned hereinbefore, frequently are reverse cycles to the refrigeration cycle described above.

### EXAMPLES

The following examples are provided for the purpose of illustrating the present invention but without limiting the scope thereof.

### EXAMPLE 1 - Medium Temperature System with HFC-32 and CF₃I

The capacity of a heat transfer composition (and a refrigerant in particular) represents the cooling or heating capacity and provides some measure of the capability of a compressor to pump quantities of heat for a given volumetric flow rate of refrigerant. In other words, given a specific compressor, a refrigerant with a higher capacity will deliver more cooling or heating power.

A refrigeration /air conditioning cycle system is simulated or provided with a condenser temperature is about 40°C, an evaporator temperature of about 2°C, a superheat of about 10°C, and a sub-cool temperature of about 5°C, and a compressor efficiency of 0.7, which would normally be considered typical "medium temperature" conditions. Several compositions of the present invention are simulated and/or tested based on a first component consisting of HFC-32, a second component consisting of CF₃I and one of a series of third components as described above. For each third component, the relative concentrations of all three components which substantially match the capacity of R-410A under the conditions mentioned above is determined. A curve of the various concentrations of each component for which the capacity substantially matches that of R0410A is then drawn or simulated (visually, mathematically, or a combination of each). An asterix is then placed on the curve to signify those compositions having a GWP of 1000 or less and a diamond is placed on the curve to signify those compositions having a GWP of greater than 1000. This procedure is repeated for all third component compounds identified above and for the second component compound HFO-1225ye-Z. One example of a "tool" for selecting a refrigerant for this system is thus developed and is presented as the chart in Figure 1. The chart in Figure 1 is analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### EXAMPLE 2 - Medium Temperature System with HFC-32/CO₂ and CF₃I

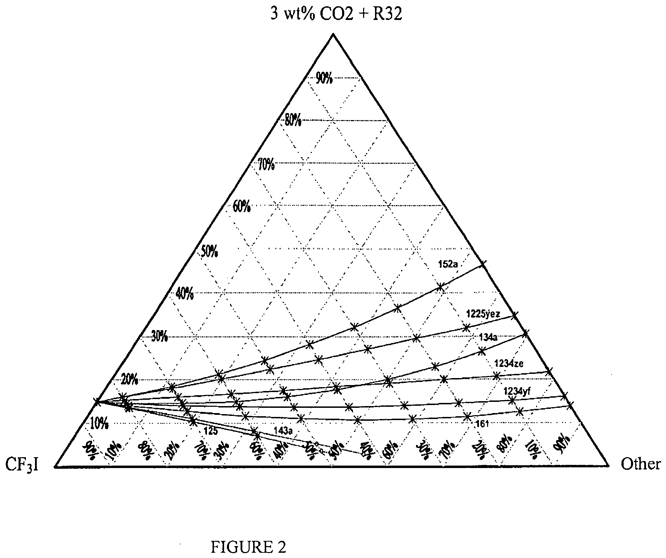

Example 1 is repeated except that the first component of the heat transfer composition consists of 3 percent by weight of CO₂ and 97 percent by weight of HFC-32 and that the refrigerant whose capacity is to be matched is R-410A. The chart in Figure 2 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### EXAMPLE 3 - Medium Temperature System with HFC-32/CO₂ and CF₃I

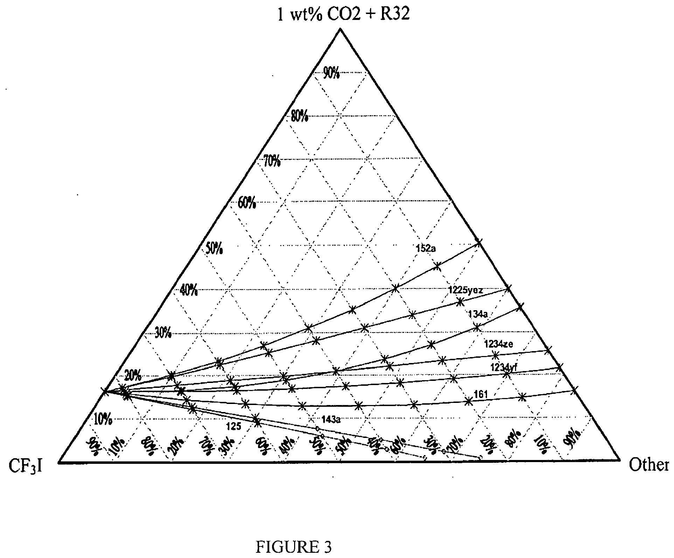

Example 1 is repeated except that the first component of the heat transfer composition consists of 1 percent by weight of CO₂ and 99 percent by weight of HFC-32 and that the refrigerant whose capacity is to be matched is R-410A. The chart in Figure 3 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### EXAMPLE 4 - Low Temperature System with HFC-32/CO₂ and CF₃I

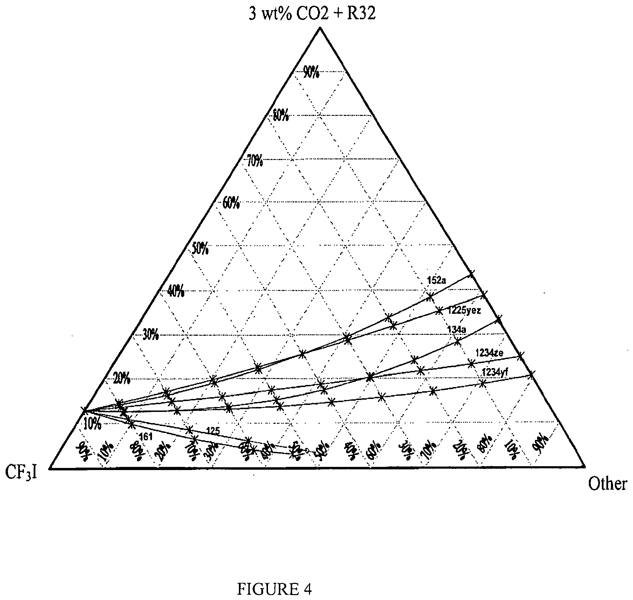

Example 1 is repeated except that the first component of the heat transfer composition consists of 3 percent by weight of CO₂ and 99 percent by weight of HFC-32, and that the refrigerant whose capacity is to be matched is R-410A, and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 4 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### EXAMPLE 5 - Low Temperature System with HFC-32/CO₂ and CF₃I

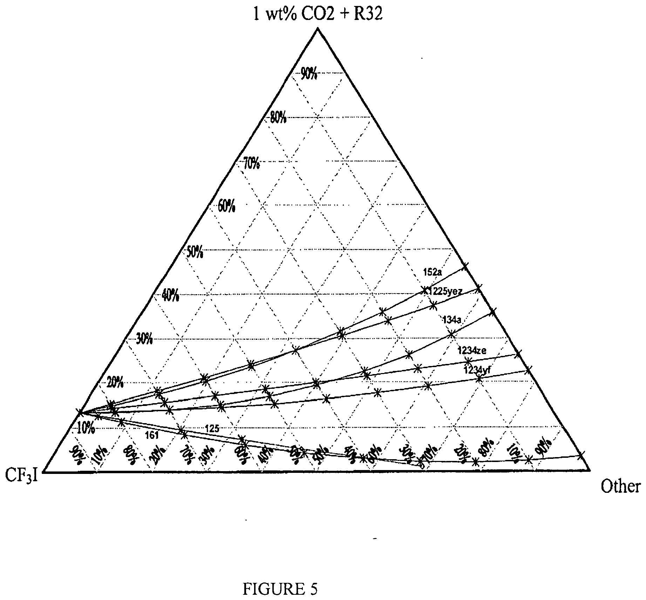

Example 1 is repeated except that the first component of the heat transfer composition consists of 1 percent by weight of CO₂ and 99 percent by weight of HFC-32, and that the refrigerant whose capacity is to be matched is R-410A, and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 5 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 6 - Medium Temperature System with HFC-32 and HFO-1225

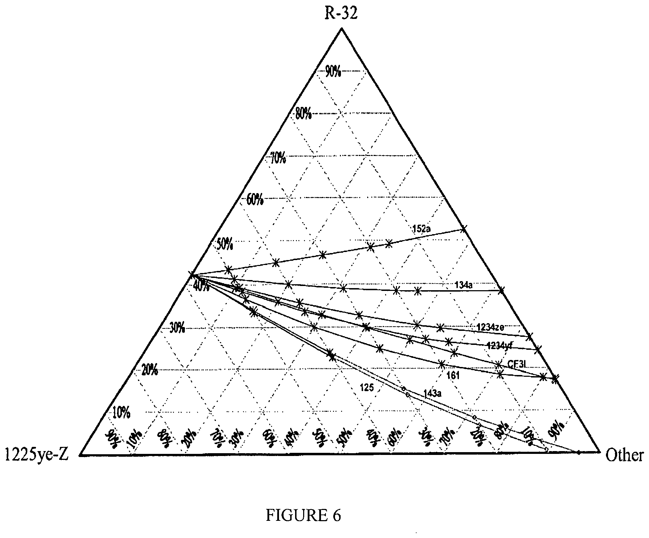

A refrigeration /air conditioning cycle system is simulated or provided with a condenser temperature is about 40°C, an evaporator temperature of about 2°C, a superheat of about 10°C, and a sub-cool temperature of about 5°C, and a compressor efficiency of 0.7, which would normally be considered typical "medium temperature" conditions. Several compositions of the present invention are simulated and/or tested based on a first component consisting of HFC-32, a second component consisting of HFO-1225ye-Z and one of a series of third components as described above. For each third component, the relative concentrations of all three components which substantially match the capacity of R-410A under the conditions mentioned above is determined. A curve of the various concentrations of each component for which the capacity substantially matches that of R0410A is then drawn or simulated (visually, mathematically, or a combination of each). An asterix is then placed on the curve to signify those compositions having a GWP of 1000 or less and a diamond is placed on the curve to signify those compositions having a GWP of greater than 1000. This procedure is repeated for all third component compounds identified above and for the second component compound CF3I. One example of a "tool" for selecting a refrigerant for this system is thus developed and is presented as the chart in Figure 6. The chart in Figure 6 is analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 7- Low Temperature System with HFC-32 and HFO-1225

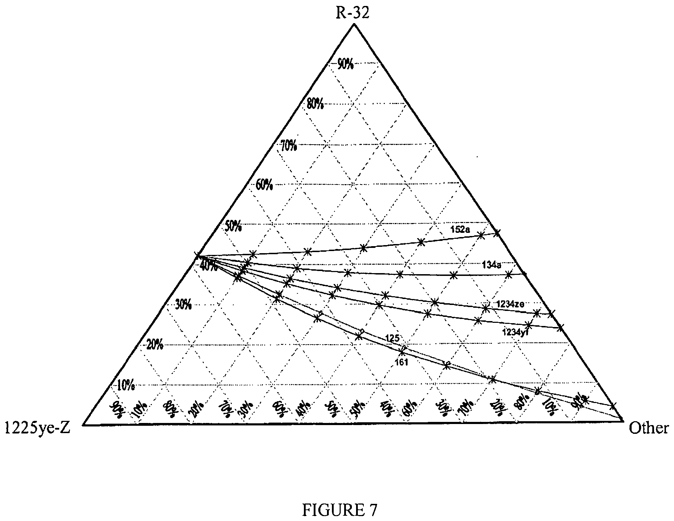

Reference example 6 is repeated except that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 7 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 8 - Medium Temperature System with HFC-32/CO₂ and HFO-1225

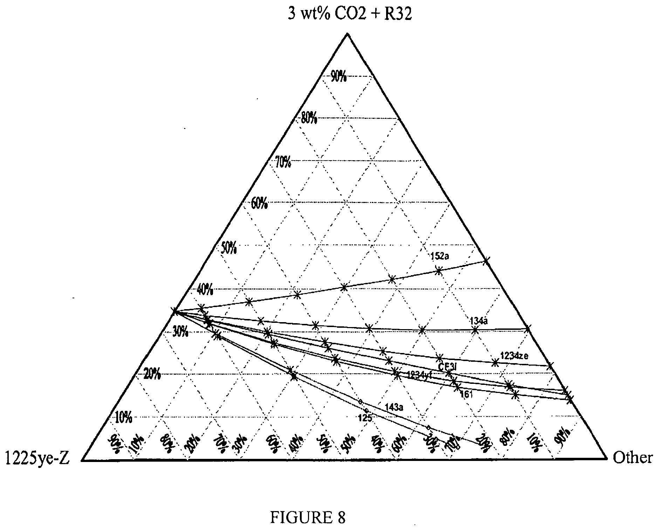

Reference example 6 is repeated except that the first component of the heat transfer composition consists of 3 percent by weight of CO₂ and 97 percent by weight of HFC-32. The chart in Figure 8 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 9 - Medium Temperature System with HFC-32/CO2 and HFO-1225

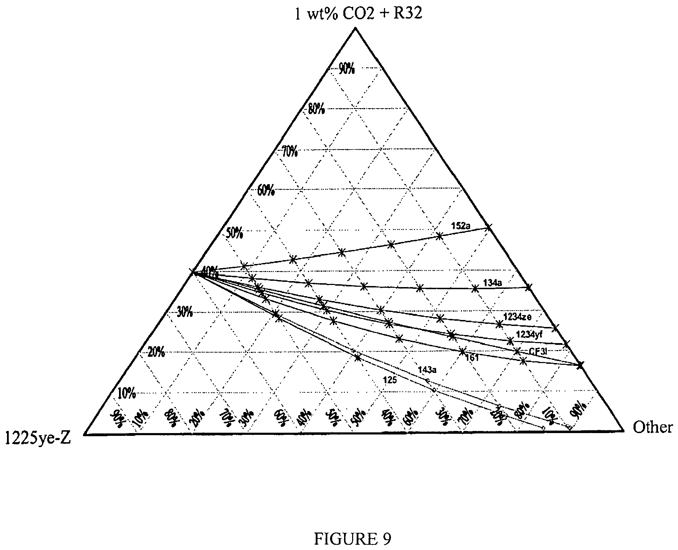

Reference example 6 is repeated except that the first component of the heat transfer composition consists of 1 percent by weight of CO₂ and 97 percent by weight of HFC-32. The chart in Figure 9 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 10 - Low Temperature System with HFC-32/CO₂ and HFO-1225

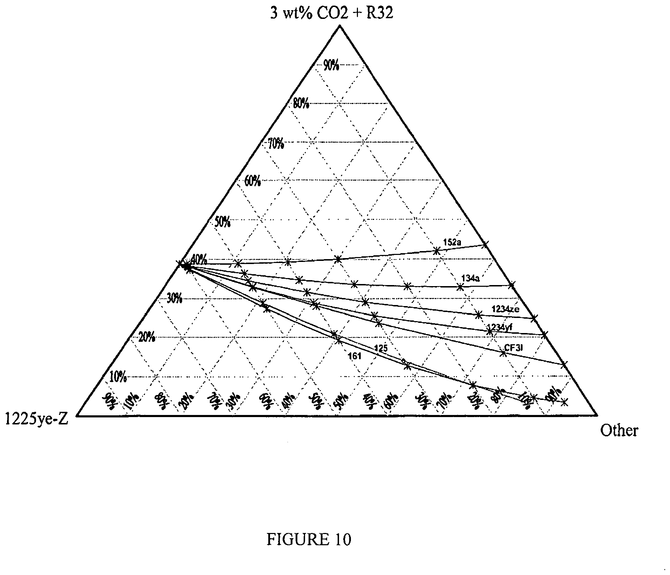

Reference example 6 is repeated except that the first component of the heat transfer composition consists of 3 percent by weight of CO₂ and 97 percent by weight of HFC-32 and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 10 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 11 - Low Temperature System with HFC-32/CO₂ and HFO-1225

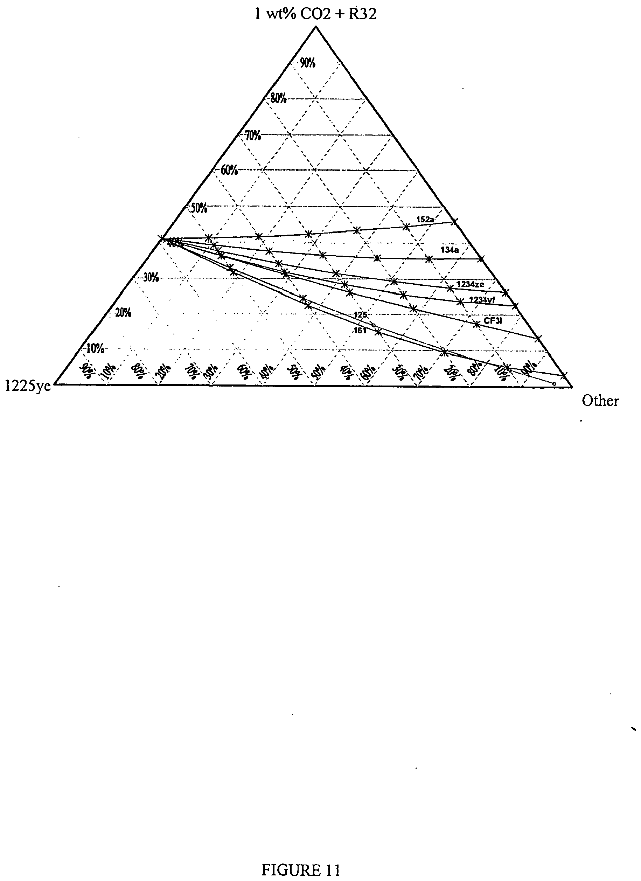

Reference example 6 is repeated except that the first component of the heat transfer composition consists of 1 percent by weight of CO₂ and 99 percent by weight of HFC-32 and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 11 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### EXAMPLE 12 - Low Temperature System with HFC-32 and CF₃I

Example 1 is repeated except that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 12 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

## Claims

1. Use as a replacement heat transfer composition for one or more of R-22, R-404A, R-407C, R-410A and R-507 of a heat transfer composition comprising:
(a) 1-60 weight % of difluoromethane (R-32);
(b) 5-98 weight % of CF3I;
(c) 1-80 weight % of 1,1,1,3-tetrafluoropropene (HFO-1234ze); and
(d) optionally less than or equal to 5 weight % CO₂;
as based upon the total mass of the composition.

2. Use according to claim 1, wherein the R-32 is present in the heat transfer composition in an amount of 5-55 weight %, as based upon the total mass of the composition.

3. Use according to claim 2, wherein the R-32 is present in the heat transfer composition in an amount of 10-50 weight %, as based upon the total mass of the composition.

4. Use according to claims 1 to 3, wherein the HFO-1234ze is cis-HFO-1234ze, trans-HFO-1234ze, or a mixture thereof.

5. Use according to any preceding claim, wherein the use is in refrigeration, air conditioning and heat pump systems.

6. Use according to claims 1 to 4 wherein the use is in an automotive air conditioning system or device, a commercial refrigeration system or device, a chiller, a residential refrigerator or freezer, a general air conditioning system, or a heat pump.

7. Use according to claim 6 wherein the use is in a chiller used in connection with commercial air conditioning system.

8. Use according to any preceding claim wherein the heat transfer composition comprises one or more components selected from lubricants, compatibilisers, and combinations of surfactants and solubilising agents.

9. Use according to claim 8 wherein the one or more additional components comprises a lubricant, wherein the lubricant is a refrigeration lubricant selected from polyol esters (POEs), polyalkylene glycols (PAGs), silicone oil, mineral oil, alkyl benzenes (ABs) and poly(alpha-olefin) (PAO).

10. Use according to claim 8 wherein the one or more additional components comprises a compatibiliser, wherein the compatibiliser is propane.

## Patentansprüche

1. Verwendung einer Wärmeübertragungszusammensetzung, umfassend:
(a) 1-60 Gew.-% Dichlormethan (R-32);
(b) 5-98 Gew.-% CF3I;
(c) 1-80 Gew.-% 1,1,1,3-Tetrafluorpropen (HFO-1234ze); und
(d) gegebenenfalls kleiner oder gleich 5 Gew.-% CO₂;
bezogen auf die Gesamtmasse der Zusammensetzung, als Ersatz-Wärmeübertragungszusammensetzung für eines oder mehrere von R-22, R-404A, R-407C, R-410A und R-507.

2. Verwendung nach Anspruch 1, wobei das R-32 in der Wärmeübertragungszusammensetzung in einer Menge von 5-55 Gew.-%, bezogen auf die Gesamtmasse der Zusammensetzung, vorliegt.

3. Verwendung nach Anspruch 2, wobei das R-32 in der Wärmeübertragungszusammensetzung in einer Menge von 10-50 Gew.-%, bezogen auf die Gesamtmasse der Zusammensetzung, vorliegt.

4. Verwendung nach einem der Ansprüche 1 bis 3, wobei es sich bei dem HFO-1234ze um cis-HFO-1234ze, trans-HFO-1234ze oder ein Gemisch davon handelt.

5. Verwendung nach einem der vorhergehenden Ansprüche, wobei die Verwendung in Kälteerzeugungs-, Klimatisierungs- und Wärmepumpensystemen erfolgt.

6. Verbindung nach den Ansprüchen 1 bis 4, wobei die Verwendung in einem Auto-Klimatisierungssystem oder einer Auto-Klimaanlage, einem kommerziellen Kälteerzeugungssystem oder einer kommerziellen Kälteerzeugungsanlage, einem Kühler, einer häuslichen Kühl- oder Gefrieranlage, einem allgemeinen Klimatisierungssystem oder einer Wärmepumpe erfolgt.

7. Verwendung nach Anspruch 6, wobei die Verwendung in einem Kühler in Verbindung mit einem kommerziellen Klimatisierungssystem erfolgt.

8. Verwendung nach einem der vorhergehenden Ansprüche, wobei die Wärmeübertragungszusammensetzung eine oder mehrere Komponenten umfasst, die aus Schmiermitteln, Verträglichkeitsvermittlern und Kombinationen von Tensiden und Lösungsvermittlern ausgewählt sind.

9. Verwendung nach Anspruch 8, wobei die zusätzliche Komponente bzw. die zusätzlichen Komponenten ein Gleitmittel umfasst bzw. umfassen, wobei es sich bei dem Gleitmittel um ein Kälteschmiermittel handelt, das aus Polyolestern (POEs), Polyalkylenglykolen (PAGs), Silikonöl, Mineralöl, Alkylbenzolen (ABs) und Poly(alpha-olefin) (PAO) ausgewählt ist.

10. Verwendung nach Anspruch 8, wobei die zusätzliche Komponente bzw. die zusätzlichen Komponenten einen Verträglichkeitsvermittler umfasst bzw. umfassen, wobei es sich bei dem Verträglichkeitsvermittler um Propan handelt.

## Revendications

1. Utilisation en tant que composition de transfert de chaleur de remplacement pour un ou plusieurs parmi le R-22, le R-404A, le R-407C, le R-410A et le R-507, d'une composition de transfert de chaleur comprenant :
(a) 1 à 60 % en poids de difluorométhane (R-32) ;
(b) 5 à 98 % en poids de CF₃I ;
(c) 1 à 80 % en poids de 1,1,1,3-tétrafluoropropène (HFO-1234ze) ; et
(d) éventuellement inférieur ou égal à 5 % en poids de CO₂ ;
sur la base de la masse totale de la composition.

2. Utilisation selon la revendication 1, le R-32 étant présent dans la composition de transfert de chaleur en une quantité de 5 à 55 % en poids, sur la base de la masse totale de la composition.

3. Utilisation selon la revendication 2, le R-32 étant présent dans la composition de transfert de chaleur en une quantité de 10 à 50 % en poids, sur la base de la masse totale de la composition.

4. Utilisation selon les revendications 1 à 3, le HFO-1234ze étant le cis-HFO-1234ze, le trans-HFO-1234ze, ou un mélange correspondant.

5. Utilisation selon l'une quelconque des revendications précédentes, l'utilisation étant dans une réfrigération, dans une climatisation de l'air et dans des systèmes de pompe à chaleur.

6. Utilisation selon les revendications 1 à 4, l'utilisation étant dans un système ou un dispositif de climatisation de l'air automobile, un système ou un dispositif commercial de réfrigération, un refroidisseur, un réfrigérateur ou un congélateur domestique, un système général de climatisation de l'air, ou dans une pompe à chaleur.

7. Utilisation selon la revendication 6, l'utilisation étant dans un refroidisseur utilisé en connexion avec un système commercial de climatisation de l'air.

8. Utilisation selon l'une quelconque des revendications précédentes, la composition de transfert de chaleur comprenant un ou plusieurs composants choisis parmi les lubrifiants, les agents de compatibilisation et les combinaisons de tensioactifs et d'agents de solubilisation.

9. Utilisation selon la revendication 8, le ou les composant(s) supplémentaire(s) comprenant un lubrifiant, le lubrifiant étant un lubrifiant de réfrigération choisi parmi les esters de polyol (POE), les polyalkylèneglycols (PAG), l'huile de silicone, l'huile minérale, les alkylbenzènes (AB) et les poly(alpha-oléfine) (PAO).

10. Utilisation selon la revendication 8, le ou les composant(s) supplémentaire(s) comprenant un agent de compatibilisation, l'agent de compatibilisation étant le propane.
